# NEUE EUROPÄISCHE PATENTSCHRIFT

(11) **EP 2 850 029 B2**
(45) Veröffentlichungstag und Bekanntmachung des Hinweises auf die Entscheidung über den Einspruch: **03.08.2022**
(45) Hinweis auf die Patenterteilung: 28.02.2018
(21) Anmeldenummer: 13725590.7
(22) Anmeldetag: 16.05.2013
(51) Int. Cl.: B67C 3/02, B29C 49/42

(54) **BEHÄLTNISHERSTELLUNGSANLAGE MIT BODENKÜHLUNG DER BEHÄLTNISSE**
INSTALLATION FOR PRODUCING CONTAINERS, WITH CONTAINER BASE COOLING
INSTALLATION DE FABRICATION DE CONTENANT À REFROIDISSEMENT DU FOND DES CONTENANTS

(30) Priorität: 16.05.2012 DE 102012104267
(43) Veröffentlichungstag der Anmeldung: 25.03.2015
(73) Patentinhaber: Krones AG, 93073 Neutraubling (DE)
(72) Erfinder: AUBURGER, Michael, 93073 Neutraubling (DE); SAUSPREISCHKIES, Wolfgang, 93073 Neutraubling (DE)
(74) Vertreter: Bittner, Bernhard
(86) Internationale Anmeldenummer: PCT/EP2013/060135
(87) Internationale Veröffentlichungsnummer: WO 2013/171299

(56) Entgegenhaltungen:
- EP-A1- 1 122 168
- EP-A1- 1 977 990
- WO-A1-2013/107493
- DE-A1-102006 053 193
- DE-A1-102010 032 398
- JP-A- 2009 184 686
- US-A1- 2008 152 538
- http://www.qullenatlas.eu/media/2b574205c7 8c63f8f f Ff 8611 ac 144227.pdf
- ?Der Prozess für heissabfüllbare PET-Flaschen? der Fachliteratur Blasformen von Kunststoff-Hohlkörpern; Michael Thielen et al; Hansa Verlag 2006
- ?A-6 Selection of the Mould Concept to Meet Customer- specific Criteria" der Fachliteratur ?Bottles,Preforms. Closures"; edited by Ottmar Brandau;PET planet print 2005
- "Handbuch der Fülltechnik - Gundlagen und Praxis für das Abfüllen flüssiger Produkte" Berhr's Verlag Hamburg, 2004, Ed. 1. Auflage 2004, ISBN:3-89947-089-3

## Beschreibung

Die vorliegende Erfindung bezieht sich auf eine Vorrichtung und ein Verfahren zum Herstellen von mit einem flüssigen Produkt befüllten Kunststoff-Flüssigkeitsbehältnissen und insbesondere von Getränkebehältnissen. Aus dem Stand der Technik sind unterschiedlichste Vorrichtungen und Verfahren zum Herstellen von mit Getränken befüllten Behältnissen bekannt. In jüngerer Zeit werden dabei üblicherweise Verfahren eingesetzt, bei denen zunächst leere Kunststoffbehältnisse aus Kunststoffvorformlingen geformt werden und diese Kunststoffbehältnisse dann mit einem Getränk befüllt werden. Dabei ist in dem Stand der Technik auch die Problematik bekannt, dass die durch einen Blasvorgang entstandenen Kunststoffbehältnisse insbesondere im Bodenbereich nach deren Herstellung teilweise gekühlt werden müssen. Dazu sind aus dem Stand der Technik diverse Verfahren und Vorrichtungen bekannt.

So beschreibt beispielsweise die EP 2 216 160 A1 eine Vorrichtung und ein Verfahren zur Herstellung und Weiterbearbeitung von Kunststoffhohlkörpern. Dabei wird vorgeschlagen, dass eine entsprechende Vorrichtung einen Standteller in der Weiterbehandlungsmaschine aufweist, auf dem jeweils ein Kunststoffhohlkörper anordenbar ist und dessen Standfläche wenigstens teilweise mit einer äußeren Bodenkontur des Kunststoffhohlkörpers korrespondiert. Auf diese Weise wird der Kunststoffhohlkörper durch den besagten Standteller bzw. dessen Material gekühlt. Der Nachteil bei dieser Vorgehensweise ist jedoch, dass die Standflächen an die jeweils ausgebildeten Behältnisse bzw. deren Bodengeometrien angepasst werden müssen.

Die DE 10 2008 048 812 A1 beschreibt ein Verfahren und eine Vorrichtung zur kombinierten Herstellung und Abfüllung von Behältern aus Kunststoff. Dabei wird das Behältnis während des Transfers durch Aufbringung eines Sprühnebels (d.h. von außen) abgekühlt. Auch im Falle der DE 10 2008 026 043 A1 erfolgt eine Kühlung eines Bereiches des Behältnisses durch einen von außen aufgebrachten Sprühnebel.

Die WO 2010 046 072 A1 beschreibt ebenfalls ein Verfahren und eine Vorrichtung zum Füllen von Behältnissen. Dabei werden die Behältnisse im Bereich einer Eingabestrecke einer Fülleinrichtung von einem Medium beaufschlagt. Während der Beaufschlagung der Behälter im Bereich der Eingabestrecke mit dem Medium werden die Behälter mit offenen Mündungen im Wesentlichen in lotrechter Richtung nach unten transportiert. Die DE 10 2006 053 193 A1 offenbart eine Vorrichtung und ein Verfahren gemäß den Oberbegriffen der Ansprüche 1 und 7.

Weiterhin sind aus dem Stand der Technik auch Vorrichtungen bekannt, bei denen Kunststoffbehältnisse und insbesondere die hier besonders relevanten PET-Behältnisse nach dem Blasen auf einen Transfer zu einer Fülleinrichtung durch auf den Boden gerichtete Wasserdüsen abgekühlt werden. Diese Kühlung ist vorteilhaft, damit die Behältnisse für die Abfüllung - insbesondere von karbonisierten Getränken - auf den dafür notwendigen Abfülldruck vorgespannt werden können, ohne dass sich der Boden der Behältnisse unzulässig verformt. Um die benötigte Abkühlzeit von ca. 2-4 Sekunden in einem Transfer zu erreichen, ist dieser entsprechend lang ausgeführt. Das Kühlwasser wird von außen auf den Boden gespritzt und die Durchkühlung des Bodens erfolgt durch Wärmeleitung. Dabei wird beispielsweise das Kühlwasser in einem Kreislaufbetrieb über einen Kühler gepumpt.

Dieses Beaufschlagen der Behältnisse von außen erlaubt eine effiziente Kühlung des Bodenbereiches. Allerdings sind die Behältnisse nach diesem Beaufschlagen außen feucht, was sich beispielsweise für einen nachfolgenden Etikettierbetrieb als nachteilig erweisen kann. Weiterhin würde eine trockene Maschine auch mikrobiologische Vorteile bieten.

Der vorliegenden Erfindung liegt daher die Aufgabe zu Grunde, eine Vorrichtung zum Herstellen von mit Flüssigkeiten und insbesondere mit Getränken befüllten Behältnissen zur Verfügung zu stellen, welche einerseits eine effiziente Kühlung von Bereichen des Behältnisses, insbesondere eines Bodenbereiches, ermöglicht, andererseits jedoch Feuchtigkeit an der Außenwandung des Behältnisses vermeidet. Auch soll der Einsatz von individuell anzupassenden Adaptern vermieden werden.

Diese Aufgabe wird erfindungsgemäß durch eine Vorrichtung gemäß Anspruch 1 und ein Verfahren gemäß Anspruch 7 gelöst. Vorteilhafte Ausführungsformen und Weiterbildungen sind Gegenstand der Unteransprüche.

Eine derartige Vorrichtung zum Herstellen von Kunststoffflüssigkeitsbehältnissen weist eine Transporteinrichtung auf, welche die Kunststoffbehältnisse entlang eines vorgegebenen Transportpfades transportiert. Weiterhin weist die Vorrichtung eine Umformungseinrichtung auf, welche Kunststoffvorformlinge zu den Kunststoffbehältnissen umformt, sowie eine entlang des Transportpfades nach der Umformungseinrichtung angeordnete erste Fülleinrichtung, welche die Kunststoffbehältnisse mit einer Flüssigkeit befüllt. Weiterhin weist die Vorrichtung eine Kühleinrichtung auf, welche zwischen der Umformungseinrichtung und der ersten Fülleinrichtung angeordnet ist und welche wenigstens einen Bereich der Wandung der Kunststoffbehältnisse - insbesondere einen Bodenbereich der Kunststoffbehältnisse - durch Beaufschlagung mit einem fließfähigen Medium kühlt. Die Kühleinrichtung weist eine zweite Fülleinrichtung auf, welche eine Flüssigkeit in das Behältnis einfüllt, wobei diese Flüssigkeit zum Kühlen eines Bodenbereiches des Kunststoffbehältnisses dient.

Es wird damit vorgeschlagen, die nötige Kühlung für die Flasche nicht durch Bespritzen von außen zu erreichen, sondern die Wärme im Inneren des Behältnisses durch Einspritzen einer Flüssigkeit abzuführen. Es wird in diesem Zusammenhang darauf hingewiesen, dass die Benennung als erste und zweite Fülleinrichtung nicht als Hinweis auf eine Anordnung dieser Fülleinrichtungen entlang des Transportpfades der Behältnisse zu verstehen ist. Bei den hier gezeigten Ausführungsformen ist die zweite Fülleinrichtung vor der ersten Fülleinrichtung angeordnet.

Dies erscheint zunächst nicht ratsam, da sich gerade eine Abfüllung des Behältnisses bei noch warmem Boden mit einem karbonisierten Getränk schwierig gestalten könnte. Es wird jedoch hier vorgeschlagen, dass gewissermaßen der Füllvorgang in wenigstens zwei Schritten durchgeführt wird, wobei zunächst ein kleiner Flüssigkeitsanteil zum Kühlen des Bodens zugeführt wird und vorteilhaft zu einem späteren Zeitpunkt die vollständige Befüllung des Behältnisses erfolgt (wobei jedoch zu diesem Zeitpunkt insbesondere der Bodenbereich des Behältnisses bereits gekühlt wurde).

Vorteilhaft wird damit bereits mit einem Teil des abzufüllenden Mediums eine Kühlung des Bodens erreicht.

Als "Kühlmittel" kann sowohl ein CO₂-freies als auch ein CO₂-haltiges Produkt benutzt werden. Weiterhin besteht die Möglichkeit, Wasser oder Sterilwasser oder auch andere Flüssigkeiten für die Bodenkühlung in das Behältnis einzubringen. Dabei kann auch eine verdünnende Wirkung des Kühlwassers durch eine entsprechende Änderung bei der Getränkeherstellung (bzw. bei der nachfolgenden Einfüllung des Großteils des Getränks) berücksichtigt werden.

Durch die erfindungsgemäße Vorrichtung kann auf eine Außenbenetzung der Behältnisse zu deren Kühlung verzichtet werden.

Bei einer weiteren vorteilhaften Ausführungsform ist die Umformungseinrichtung eine Blasformeinrichtung, welche die Kunststoffbehältnisse durch Beaufschlagung mit einem gasförmigen Medium und insbesondere Druckluft umformt. Vorteilhaft handelt es sich bei der Umformungseinrichtung um eine Streckblasmaschine. Damit weist die Umformungseinrichtung bevorzugt eine Reckstange auf (genauer weist bevorzugt jede Umformungsstation 44 eine Reckstange auf), welche die Behältnisse in deren Längsrichtung während des Umformungsvorgangs dehnt. Insbesondere für die hier erwähnten Streckblasmaschinen erweist sich die erfindungsgemäße Kühlung des Bodenbereichs als besonders vorteilhaft, da durch Streckblasmaschinen gefertigte Behältnisse oftmals unmittelbar nach ihrer Erzeugung einen noch relativ warmen Bodenbereich aufweisen.

Nach einer weiteren vorteilhaften Ausführungsform kann die Blasformeinrichtung auch eine Erwärmungseinrichtung zum Erwärmen der Kunststoffvorformlinge aufweisen. Dabei ist es möglich, dass diese Erwärmungseinrichtung in Form eines Ofens der Blasformmaschine vorgeschaltet ist und zunächst Kunststoffvorformlinge soweit erwärmt werden, dass sie in der Blasformeinrichtung zu Kunststoffbehältnissen expandiert werden können. Es wäre jedoch auch möglich, dass der Umformungseinrichtung direkt eine Herstellungseinrichtung zum Herstellen von Kunststoffvorformlingen vorgeschaltet ist, wobei diese Herstellungseinrichtung vorteilhaft erwärmte Kunststoffvorformlinge erzeugt.

In einer weiteren vorteilhaften Ausführungsform weist die Vorrichtung einen Reinraum auf, in dem wenigstens ein Behandlungsschritt und bevorzugt mehrere Behandlungsschritte stattfinden.

Dabei ist es möglich, dass dieser Reinraum wenigstens eine gegenüber diesem Reinraum bestehende und eine gegenüber dieser stehenden Wandung bewegliche Wandung aufweist.

Bei einer weiteren bevorzugten Ausführungsform ist dieser Reinraum derart ausgebildet, dass zumindest der Füllvorgang des Behältnisses innerhalb des Reinraumes stattfindet, bevorzugt jedoch auch der Umformungsvorgang sowie der Kühlvorgang für den Boden des Behältnisses.

Bei einer weiteren vorteilhaften Ausführungsform weist die Vorrichtung eine Sterilisationseinrichtung auf, welche die Behältnisse und/oder die Vorformlinge wenigstens abschnittsweise sterilisiert. Diese Sterilisationseinrichtung kann dabei beispielsweise eine Elektronenbestrahlungseinrichtung aufweisen oder aber eine Einrichtung, welche die Kunststoffbehältnisse mit einem Sterilisationsmedium wie etwa Peressigsäure oder Wasserstoffperoxid beaufschlagt. Dabei wäre es möglich, dass eine derartige Sterilisationseinrichtung die Behältnisse unmittelbar nach deren Herstellung sterilisiert. In dieser Ausgestaltung ist die Sterilisationseinrichtung in der Transportrichtung der Behältnisse vor der zweiten Fülleinrichtung angeordnet.

Bei einer weiteren vorteilhaften Ausführungsform ist wenigstens eine Transporteinheit zum Transportieren der Kunststoffbehältnisse zwischen der zweiten Fülleinrichtung und der ersten Fülleinrichtung vorgesehen. Dies bedeutet, dass die Behältnisse zunächst und insbesondere zum Zwecke der Kühlung von der zweiten Fülleinrichtung zumindest geringfügig befüllt werden und erst anschließend mit der ersten Fülleinrichtung befüllt werden. Dabei ist es möglich, dass die zweite Fülleinrichtung selbst als Transporteinheit ausgestaltet ist, welche die Behältnisse während ihres Transports befüllt. Es wäre jedoch auch möglich, dass zwischen der zweiten Fülleinrichtung und der ersten Fülleinrichtung eine weitere Transporteinheit vorgesehen ist, welche die Behältnisse lediglich transportiert, also nicht gleichzeitig befüllt.

Bei einer weiteren vorteilhaften Ausführungsform ist die Umformungseinrichtung zum Umformen der Kunststoffvorformlinge zu Kunststoffbehältnissen im Betrieb wenigstens zeitweise mit der Fülleinrichtung geblockt. Dies bedeutet, dass die Umformungseinrichtung und die Fülleinrichtung wenigstens zeitweise mit den gleichen Arbeitsgeschwindigkeiten betrieben werden. Auf diese Weise können beispielsweise Pufferstrecken und dergleichen vermieden werden. Vorteilhaft werden die Umformungseinrichtung und die erste Fülleinrichtung permanent im Blockbetrieb betrieben. Bei einer weiteren vorteilhaften Ausführungsform ist zwischen der Umformungseinrichtung und der Fülleinrichtung wenigstens eine Ausschleuseinrichtung zum Ausschleusen von Behältnissen aus dem Herstellungsstrom denkbar. Dabei wäre es möglich, dass fehlerhafte Behältnisse ausgeschleust werden, oder dass beispielsweise während oder nach einem Maschinenstopp ein Ausschleusen von Behältnissen erfolgt, um deren Befüllung zu vermeiden.

Bei einer weiteren vorteilhaften Ausführungsform weist die Vorrichtung wenigstens eine Inspektionseinrichtung zum Inspizieren der Behältnisse auf. Diese Inspektionseinrichtung ist dabei vorteilhaft ebenfalls zwischen der Umformungseinrichtung und der ersten Fülleinrichtung angeordnet.

Erfindungsgemäß weist die Vorrichtung eine Dosiereinrichtung auf, welche einen Anteil des abzufüllenden Produktes mittels der zweiten Fülleinrichtung in die Kunststoffbehältnisse hinein dosiert. Dies bedeutet, dass hier bereits mit dem Produkt der Bodenbereich der Behältnisse gekühlt wird.

Bei einer weiteren vorteilhaften Ausführungsform weist die Transporteinrichtung mehrere aufeinanderfolgende Transporteinheiten zum Transportieren der Kunststoffbehältnisse auf. Bei einer weiteren vorteilhaften Ausführungsform ist dabei wenigstens eine dieser Transporteinheiten ein Transportstern bzw. weist vorteilhaft einen drehbaren Träger auf, an dem eine Vielzahl von Halteelementen zum Halten der Behältnisse angeordnet ist. Vorteilhaft weist wenigstens eine dieser Transporteinrichtungen auch Füllelemente zum Befüllen der Behältnisse auf. Diese Füllelemente können dabei stationär angeordnet sein (was sich insbesondere bei geringen Füllmengen anbietet) oder sich mit den Behältnissen mitbewegen.

Bei einer weiteren vorteilhaften Ausführungsform weist die Vorrichtung eine Kühleinrichtung zum Kühlen des durch die zweite Fülleinrichtung einzufüllenden Produktes auf. Dabei kann die Kühleinrichtung derart gestaltet sein, dass sie diesen ersten Produktanteil auf eine Temperatur kühlt, die unter Raumtemperatur liegt. Es wäre jedoch auch möglich, dass die Kühleinrichtung derart gestaltet ist, dass die zweite Fülleinrichtung das flüssige Medium mit Raumtemperatur in das gerade gefertigte Kunststoffbehältnis einfüllt.

Bei einer weiteren vorteilhaften Ausführungsform weist die Vorrichtung eine Steuerungseinrichtung auf, welche derart gesteuert ist, dass sie die Einführung der Flüssigkeit durch die erste Fülleinrichtung in Abhängigkeit von der Einfüllung der Flüssigkeit durch die zweite Fülleinrichtung steuert. Dabei kann beispielsweise die erste Fülleinrichtung die Menge und auch die Zusammensetzung der Flüssigkeit, welche bereits durch die zweite Fülleinrichtung eingefüllt wurde, berücksichtigen. Falls beispielsweise die zweite Fülleinrichtung lediglich Sterilwasser einfüllt, kann dieser bereits eingefüllte Sterilwasseranteil bei der Abfüllung des Behältnisses mit der zweiten Fülleinrichtung berücksichtigt werden. Auch können jedoch bereits durch die zweite Fülleinrichtung eingefüllte Komponenten, wie beispielsweise Aromastoffe, bei der Befüllung mit der ersten Fülleinrichtung berücksichtigt werden.

Vorteilhaft kann dabei die Steuerungseinrichtung einen Ventilknoten aufweisen, der ein oder mehrere Ventile ansteuert, mit denen die Zufuhr der Flüssigkeiten in die Behältnisse gesteuert wird.

Es wäre weiterhin möglich, dass die Vorrichtung zwei oder mehrere Fülleinrichtungen aufweist, welche vor der ersten Fülleinrichtung angeordnet sind und welche entsprechend mehrere Komponenten des Produktes in das Behältnis einfüllen. Vorteilhaft können dabei diese Fülleinrichtungen derart ausgestaltet sein, dass sie unterschiedliche Mengen eines weiteren Produkts in die Behältnisse einfüllen. Bei einer weiteren vorteilhaften Ausführungsform ist die erste Fülleinrichtung derart ausgestaltet, dass sie ein karbonisiertes Produkt und insbesondere ein karbonisiertes Getränk in die Behältnisse einfüllt.

Die vorliegende Erfindung ist weiterhin auf ein Verfahren zum Herstellen von mit Flüssigkeit befüllten Kunststoffbehältnissen gemäß Anspruch 7 gerichtet. Bei einer erfindungsgemäßen Ausführungsform des Verfahrens ist der besagte vorgegebene Anteil, der zum Zwecke der Kühlung in die Kunststoffbehältnisse eingefüllt wird, kleiner als 30% der insgesamt in das Kunststoffbehältnis abzufüllenden Flüssigkeit, bevorzugt kleiner als 20%, besonders bevorzugt kleiner als 10% und besonders bevorzugt kleiner als 5% der insgesamt in das Kunststoffbehältnis abzufüllenden Flüssigkeit. Insbesondere wenn sehr geringe Einfüllmengen verwendet werden, ist es möglich, dass diese Mengen bei der nachfolgenden Einfüllung des Hauptanteils des Produkts nicht berücksichtigt werden oder aber mit einem Standardwert berücksichtigt werden, so dass insoweit keine weitere Steuerung mehr erforderlich ist. Bei einem weiteren vorteilhaften Verfahren ist jedoch die Menge der zum Zwecke der Kühlung eingefüllten Flüssigkeit zumindest ausreichend, um einen Bodenbereich des Behältnisses vollständig zu benetzen.

Bei einem weiteren vorteilhaften Verfahren füllen die erste Fülleinrichtung und die zweite Fülleinrichtung unterschiedliche Komponenten des Füllproduktes in das Behältnis ein. So wäre es beispielsweise möglich, dass zunächst Aromastoffe und anschließend eine weitere Flüssigkeit eingefüllt werden, es wäre jedoch auch möglich, dass jeweils das gleiche Medium, jedoch bevorzugt in unterschiedlichen Anteilen, eingefüllt wird.

Bei einem weiteren vorteilhaften Verfahren füllt die zweite Fülleinrichtung eine nicht karbonisierte Flüssigkeit in die Kunststoffbehältnisse ein.

Bei einem weiteren vorteilhaften Verfahren füllt die erste Fülleinrichtung eine karbonisierte Flüssigkeit in die Behältnisse ein und/oder es wird nach der Befüllung durch die erste Fülleinrichtung noch ein Karbonisiervorgang durchgeführt.

Bei einem weiteren vorteilhaften Verfahren wird ein teilgefülltes Behältnis noch einen vorgegebenen Teil des Transportpfades bis zur vollständigen Befüllung transportiert bzw. geführt.

Weitere Vorteile und Ausführungsformen ergeben sich aus den beigefügten Zeichnungen:

Darin zeigen:
- Fig. 1: eine schematische Darstellung einer Anlage zum Herstellen von Behältnissen;
- Fig. 2: eine Detailansicht einer Ausführungsform der in Figur 1 gezeigten Anlage;
- Fig. 2a: eine Detailansicht einer Einspritzeinrichtung;

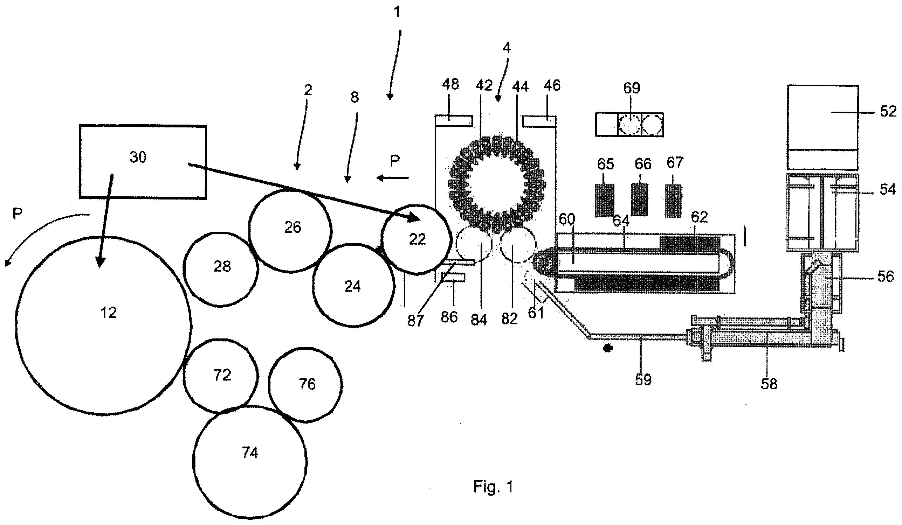

Figur 1 zeigt eine schematische Darstellung einer Vorrichtung 1 zum Herstellen von Getränkebehältnissen. Dabei bezieht sich das Bezugszeichen 52 auf eine Kippvorrichtung zum Einfüllen von Kunststoffvorformlingen in einen Vorratsbehälter 54. Mittels eines Steilförderers 56 und eines Rollensortierers 58 werden die Kunststoffvorformlinge über eine Zuführschiene 59 zu einem Einlaufstern bzw. Eintaktstern 61 gefördert. An diesem Einlaufstern 61 werden die Kunststoffvorformlinge auch vereinzelt.

Das Bezugszeichen 60 bezieht sich auf einen Linearofen, in welchem die Kunststoffvorformlinge erwärmt werden. Dabei ist hier eine Transportkette vorgesehen, an der eine Vielzahl von Halteelementen zum Halten der Kunststoffvorformlinge angeordnet ist. Dabei ist es zusätzlich möglich, dass die einzelnen Kunststoffvorformlinge um ihre Längsachse gedreht werden. Vorteilhaft handelt es sich bei den Halteelementen um Haltedorne, welche in die Mündungen der Behältnisse eingreifen und diese so halten. Anstellen des hier gezeigten Linearofens könnten jedoch auch andere Erwärmungseinrichtungen wie etwa Mikrowellenöfen verwendet werden.

Mittels einer Vielzahl von Erwärmungseinrichtungen bzw. Heizkästen 62 werden die Kunststoffvorformlinge im Vorbeilaufen erwärmt. Anschließend werden die Kunststoffvorformlinge über ein Transferrad 82 an ein Blasrad 42 übergeben. An diesem Blasrad 42 ist eine Vielzahl von Umformungsstationen 44 angeordnet, in denen die Kunststoffvorformlinge zu Kunststoffbehältnissen umgeformt werden. Dabei werden genauer die Kunststoffvorformlinge mit Druckluft beaufschlagt und so gegen eine Innenwandung von Blasformen expandiert. Bezugszeichen 86 kennzeichnet eine Bedienungseinheit für diese Anlage. Das Bezugszeichen 46 kennzeichnet eine Wasserversorgung für die Umformungseinrichtung und das Bezugszeichen 48 eine Luftversorgung wie insbesondere eine Blasluftversorgung. Bezugszeichen 4 kennzeichnet die Umformungseinrichtung in ihrer Gesamtheit.

Optional können noch (hier nur schematisch dargestellte) Kühleinrichtungen 69, Wärmeanlagen (heatset) 65, Temperiergeräte 66 sowie heatset-Temperiergeräte 67 vorhanden sein. Bezugszeichen 84 kennzeichnet ein weiteres Transferrad, über welches die nunmehr geblasenen Kunststoffbehältnisse aus der Umformungseinrichtung 4 ausgegeben werden.

Dabei kann sich beispielsweise an die Umformungseinrichtung eine hier nur teilweise dargestellte Lufttransporteinrichtung 87 anschließen.

Die Bezugszeichen 22, 24 und 26 beziehen sich jeweils auf Transporteinheiten welche jedoch auch als Bodenkühleinrichtungen fungieren, die zum Kühlen des Bodens der gefertigten Behältnisse eingesetzt werden.

Die Bezugszeichen 28, 72 und 76 beziehen sich jeweils auf Transportsterne, welche die Behältnisse transportieren. Diese einzelnen Transporteinheiten bestimmen damit den hier nur schematisch dargestellten Transportpfad P, entlang dessen die Behältnisse transportiert werden. Das Bezugszeichen 2 bezieht sich auf die Transporteinrichtung für die Behältnisse in ihrer Gesamtheit, welche durch die oben erwähnten einzelnen Transporteinheiten 22, 24, 26, 72 und 74, sowie gegebenenfalls noch durch weitere Transporteinheiten ausgebildet ist.

Das Bezugszeichen 12 kennzeichnet eine erste Fülleinrichtung, welche die Behältnisse mit einer Flüssigkeit und insbesondere einem Getränk befüllt. Diese Fülleinrichtung 12 dient dabei vorteilhaft ebenfalls als Transporteinheit, d.h. bevorzugt werden die Behältnisse von der Fülleinrichtung 12 während ihres Transports befüllt. Die Fülleinrichtung ist dabei bevorzugt ein Rotationsfüller, und weist daher bevorzugt einen drehbaren Träger auf, an dem die einzelnen Füllelemente angeordnet sind. Weiterhin können noch weitere Fülleinheiten vorgesehen sein, etwa eine Fülleinheit, welche nach der Befüllung mit dem Produkt noch ein weiteres Medium wie etwa ein Gas (insbesondere Stickstoff oder eine Stickstoffverbindung) in die bereits befüllten Behältnisse einfüllt. Vorteilhaft füllt die erste Fülleinrichtung 12 ein karbonisiertes Getränk in die Behältnisse ein.

Das Bezugszeichen 30 kennzeichnet allgemein eine Steuerungseinrichtung, welche das Zudosieren der Flüssigkeit in den drei Bodenkühleinrichtungen 22, 24, 26 und auch das Einfüllen des Großteiles der Flüssigkeit durch die Fülleinrichtung 12 - bevorzugt in Abhängigkeit voneinander- steuert.

Das Bezugszeichen 74 kennzeichnet schließlich eine Verschließeinrichtung, welche die nunmehr befüllten Behältnisse verschließt. Auch die Verschließeinrichtung transportiert dabei vorteilhaft die Behältnisse, d.h. die Behältnisse werden vorteilhaft während ihres Verschließens transportiert.

Dabei ist es möglich, dass über die Transporteinheiten bzw. Bodenkühleinrichtungen 22, 24, 26, welche in ihrer Gesamtheit die Kühleinrichtung bzw. zweite Fülleinrichtung 8 bilden, kleinere Mengen an ausgemischten, gekühlten aber noch nicht karbonisierten Getränken - insbesondere auch vor der Karbonisierung - einfüllen.

Die Zuführung des Produktes in den drei Bodenkühleinrichtungen fungierenden Transporteinheiten 22, 24 und 26 kann dabei über eine Rohrleitung oder einen Metallschlauch in einen Drehverteiler an den jeweiligen Sternen der Bodenkühleinrichtungen 22, 24 und 26 erfolgen, der jeweils Leitungen zu den einzelnen Fülldüsen aufweist. Vorteilhaft weisen diese als Bodenkühleinrichtungen fungierenden Transporteinheiten 22, 24, 26 eine Vielzahl von Füllelementen auf, welche die Behältnisse zum Zwecke der Bodenkühlung befüllen. Weiterhin weisen diese Bodenkühleinrichtungen bevorzugt auch Halteelemente zum Halten der einzelnen Behältnisse auf, wie beispielsweise Klammern, welche die Behältnisse an ihrem Halsbereich greifen.

Bevorzugt wird dabei eine geschwindigkeitsabhängige Zeitsteuerung der Regelung über die Füllerelektronik vorgenommen. Besonders bevorzugt füllen die einzelnen Füllelemente die Behältnisse jeweils zumindest so, dass der Boden der Behältnisse vollständig benetzt ist, um so eine Kühlung des Bodens zu erreichen.

Aufwendige Versuche ergaben eine notwendige Kühlflüssigkeitsmenge von ca. 10-20ml pro Behälter. Die im Boden enthaltene abzuführende Wärme, wird durch das eindosierte Produkt aufgenommen und so das Kunststoffmaterial der Flasche gekühlt. Innerhalb des Produkts ist die Wärme unschädlich gemacht und der Boden der Kunststoffflasche wird stabilisiert für eine Befüllung mit CO2-haltigen Füllgütern in der nachgeschalteten Füllmaschine.

Die Kühlung kann durch noch nicht karbonisiertes Füllgut durch Abzweigung aus dem Getränkemixer vor dem Karbonisiermodul erfolgen, um ein Schäumen des Füllguts bei atmosphärischen Füllbedingungen zu vermeiden. Ebenfalls denkbar ist das Einbringen separat bereitgestellter Aromen (flüssig oder Suspension vom Feststoff) um die notwendige Bodenkühlung mit dem Zusatznutzen einer Aromadosage zu verbinden. Dies hat den Vorteil, dass zum Beispiel verschiedene Getränkesorten mit einer ähnlichen Grundstruktur nur durch Aromadosage ihren Geschmack erhalten und ein Sortenwechsel im Füller ohne Getränkeverluste oder ein gleichzeitiges Produzieren von verschiedenen Getränken ermöglicht wird.

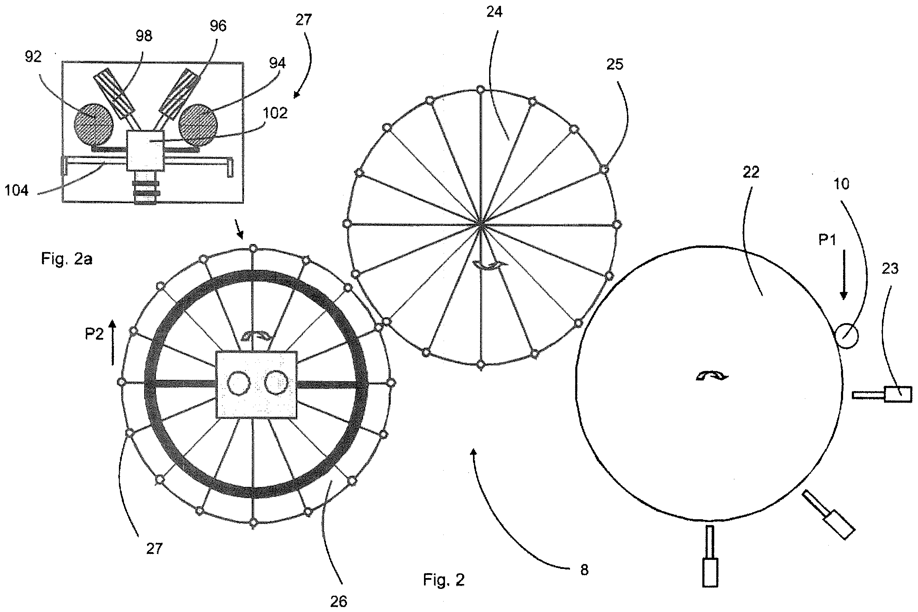

Figur 2 zeigt eine Ausgestaltung der in ihrer Gesamtheit mit 8 bezeichneten Kühleinrichtung. Die Behältnisse 10 werden hier entlang des Pfeiles P1 zugeführt und entlang des Pfeiles P2 weiter abgeführt, beispielsweise an einen Füller. Die zunächst leeren Behältnisse werden zunächst - hier mit Hochdruckeinspritzungseinrichtungen 23 - befüllt. Dabei sind hier diese Einspritzeinrichtungen 23 stationär angeordnet und füllen nur geringste Mengen (beispielsweise ca. 1 ml) in die einzelnen Behältnisse 10 (hier nur schematisch dargestellt) ein. Dabei kann es sich bei den Einspritzungseinrichtungen 23 auch um zeit- oder volumengesteuerte Düsen handeln. Dabei wäre es auch möglich, dass mehrere derartiger zeitgesteuerter Düsen eingesetzt werden, welche unterschiedliche Substanzen, beispielsweise unterschiedliche Aromen in die Behältnisse einfüllen. Daneben wäre es auch möglich, dass zeit- und volumengesteuerte Düsen alternativ eingesetzt werden. Diese Anordnung mit den stationären Einspritzeinrichtungen eignet sich insbesondere für niedrige Geschwindigkeiten (Arbeitsgeschwindigkeiten).

Generell kann dabei ein Produkt bzw. auch ein Aroma über eine von einem Ventilknoten kommende Stichleitung eingefüllt werden.

Im Anschluss daran werden die Behältnisse zu der Transporteinrichtung 24 mit den daran angeordneten Einfülleinrichtungen 25 gefördert. Diese Einfülleinrichtungen 25 bewegen sich hier mit der Transporteinrichtung 4 mit. An dieser Transporteinrichtung ist pro Halteeinrichtung eine Einfülleinrichtung 25 vorgesehen. Auch bei diesen Einfülleinrichtungen kann es sich um zeit- oder volumengesteuerte Düsen handeln. Hier ist bevorzugt jeweils eine Einfülleinrichtung 25 einem Behältnis zugeordnet, wodurch höhere (Arbeits-)geschwindigkeiten ermöglicht werden Dabei kann ein (nicht gezeigter) zentraler Behälter mit Flüssigkeit vorhanden sein oder auch bereits davor ein Dosierbehälter. In diesem Bereich kann beispielsweise eine weitere Menge, wie z.B. 10-20 ml an Flüssigkeit in die Behältnisse eingeführt werden. Optional ist dabei eine weitere Anbindung an eine zusätzliche Mischspur über einen Ventilknoten bzw. über eine Steuerungseinrichtung 30 (vgl. Figur 1) möglich. Weiterhin ist es hier möglich, dass sowohl die Anbindung an eine zusätzliche Mischspur und der Einsatz eines zentralen Behälters alternativ erfolgen und bevorzugt der Anlagenbenutzer aus diesen beiden Optionen auswählen kann

Grundsätzlich denkbar ist es, dass in jedem Dosierstern auch verschiedene Aromen gleichzeitig in die Flaschen eingebracht werden können - so werden verschiedene Getränke nebeneinander produziert.

Weiterhin werden die Behältnisse weiter gefördert zu der Transporteinrichtung 26, wobei in diesem Bereich über Einfülleinrichtungen 27 die Zuführung von Suspensionen (z.B. Partikeln in kleinen Größen wie Mikrometer- oder Nanometergrößen) möglich ist. Diese Nanodosierung kann dabei beispielsweise über Endloskolbensysteme in einem zentralen Ringkessel auf den Stern erfolgen, der von einem Mischer gespeist wird. Der Vorteil hierbei ist, dass es möglich ist, die Suspension ohne langen Transportweg und damit gleichmäßig konzentriert in die Behältnisse zu bringen. Bei diesen Einfülleinrichtungen 27 kann auch ein Kammerdosierer ähnlich einer Schraube zum Einsatz kommen.

Es wird darauf hingewiesen, dass die hier gezeigten Füllvarianten zum Dosieren des Produkts auch kombiniert oder (insbesondere innerhalb einer Anlage) alternativ verwendet werden können. So kann beispielsweise, wenn eine bestimmte Art der Einfüllung nicht benötigt wird, die entsprechende Transporteinrichtung (22, 24, oder 26) durch einen Klammerstern ersetzt werden, der bevorzugt lediglich zum Transportieren der Behältnisse dient.

Bei einem weiteren bevorzugten Verfahren wird die im Rahmen der Vordosierung eindosierte Menge an eine Steuerungseinrichtung übermittelt (bzw. hierfür charakteristisch Daten) und diese kann die Menge bei der Dosierung durch die erste Fülleinrichtung berücksichtigen.

Figur 2a zeigt eine genauere Darstellung einer derartigen Einfülleinrichtung. Dabei bezieht sich das Bezugszeichen 104 auf einen Träger, an dem ein Füllventil 102 angeordnet ist. Diesem Füllventil 102 können aus zwei Reservoirs 92 und 94 jeweils Flüssigkeiten zugeführt werden, wobei dieser Zufluss über Ventile 96 und 98 gesteuert wird. Die Dosiereinheit dient zum Einbringen von Suspensionen bei definierter Konzentration. Derartige Dosiereinheit mit Endloskolben finden in abgewandelter Form an anderen Technologiebereichen Anwendung. In der Medizin oder Chemie werden so zum Beispiel Suspensionen aus Mikro- und Nanopartikeln dosiert. Ein Anwendungsfeld ist beispielsweise das Compoundieren von Kunststoffen. Bei einem bevorzugten Verfahren wird vorgeschlagen, ggfs. Aromen auch in fester Form als Kleinstpartikel zur Verfügung zu stellen.

So wäre die beschriebene Vorrichtung nutzbar zum Einbringen der Aromapartikel in eine bestehende Abfülltechnik in der Getränkeindustrie. Die Partikelsuspension kann auf diese Weise ohne lange Transportwege und damit vorteilhaft verlustfrei sowie ohne Agglomeration in den Produkttank der von Abfülleinheit 26 eingebracht werden. Von dort wird die Suspension in die Behälter über volumen- oder zeitgesteuerte Ventile eindosiert. Die Menge der zudosierten Suspension ist bevorzugt zum Erreichen des Kühleffekts genauso groß, wie bei den anderen Dosiereinheiten (24,22). Falls die Menge der Suspension dafür nicht ausreicht, ist ein Ergänzen mit ausgemischtem Getränk aus einem separaten Produktbehälter, der vorteilhaft am Dosierstern angebracht ist, möglich. Denkbar ist sowohl eine Anordnung der Endloskolben auf dem drehenden Teil als auch eine Anordnung im stehenden Teil mit Zuführung über einen Drehverteiler von unten (nicht gezeigt). Vom Produkttank aus kann die Dosierung der Suspensionen in die Behälter über Füllventile nach dem Stand der Technik in Getränke-und Pharmaindustrie mit Füllrohr oder im Freistrahlverfahren in die Behälter erfolgen, wobei auf einen kurzen Produktweg geachtet werden sollte. Die Abmessung der korrekten Füllmenge erfolgt hierbei wahlweise nach den Methoden Zeit-Druck-Füllen, Drehkolbenpumpen, volumetrische oder auch Wägefüllung.

Vorteilhaft ist eine gemeinsame Steuerung vorgesehen, welche auch weitere Maschinenteile wie etwa eine (Streck)blasmaschine berücksichtigt. Über die gemeinsame zentrale Steuerung der Maschinenelemente Streckblasmaschine, Bodenkühlen-von-innen und Füller laufen bevorzugt die Informationen über die vordosierten Mengen zum Zwecke der Kühlung ein. Aus dieser Information wird die restliche Füllmenge zum Erreichen der gesetzlich vorgeschriebenen Mindestfüllmenge berechnet, welche vom Füller eingefüllt wird. Dies ist besonders wichtig, falls in einen Behälter mit mehreren Dosiereinheiten Flüssigkeit dosiert wird. Dann muss die Steuerung die insgesamt dosierte Menge an den Füller weitergeben, um eine Überfüllung / Unterfüllung zu vermeiden.

Bei einem bevorzugten Verfahren wird die durch die erste Fülleinrichtung den Behältnissen zugeführte (bzw. vordosierte) Menge in Abhängigkeit von derjenigen Wärmemenge bestimmt, die aus dem Bodenbereich abzuziehen ist. Vorteilhaft wird zumindest eine derartige Wärmemenge abgezogen, dass der nachfolgende Füllprozess nicht mehr zu ungewünschten Verformungen der Behältnisse führt.

Weiterhin ist es möglich, dass die Befüllung durch die zweite Befüllungseinrichtung und die Befüllung durch die erste Befüllungseinrichtung aufeinander angepasst werden bzw. in Abhängigkeit voneinander gesteuert werden. So können beispielsweise bei der Abfüllung des Produkts durch die zweite Fülleinrichtung bereits die Menge und ggfs auch die Bestandteile der durch die erste Fülleinrichtung eingefüllten Flüssigkeit berücksichtigt werden. Folgende Produktkomponenten eigenen sich in besonderer Weise zur Kühlung bzw. zur Vordosage: Wasser, noch nicht karbonisiertes Produkt, karbonisiertes Produkt, Feststoffe als Suspension mit Wasser gelöst.

### Bezugszeichenliste

- 1: Vorrichtung
- 2: Transporteinrichtung
- 4: Umformungseinrichtung
- 8: zweite Fülleinrichtung
- 10: Behältnis
- 12: erste Fülleinrichtung
- 22, 24, 26: als Kühleinrichtungen dienende Transporteinheiten
- 23: Einspritzeinrichtung
- 25: Einfülleinrichtung
- 27: Einfülleinrichtung
- 28: Transportstern
- 30: Steuerungseinrichtung
- 42: Blasrad
- 44: Umformungsstation
- 46: Wasserversorgung
- 48: Luftversorgung
- 52: Kippvorrichtung
- 54: Vorratsbehälter
- 56: Steilförderer
- 58: Rollensortierer
- 59: Zuführschiene
- 60: Erwärmungseinrichtung, Linearofen
- 61: Einlaufstern
- 62: Heizkasten
- 65: Wärmeanlagen
- 66: Temperiergerät
- 67: Temperiergerät (heatset)
- 69: Kühleinrichtung
- 72, 76: Transportstern
- 74: Verschließeinrichtung
- 82: Transferrad
- 84: weiteres Transferrad
- 86: Bedienungseinheit
- 87: Lufttransporteinrichtung
- 92, 94: Reservoirs
- 96, 98: Ventile
- 102: Füllventil
- 104: Träger

- P: Transportpfad
- P1: Zuführrichtung
- P2: Abführrichtung

## Patentansprüche

1. Vorrichtung (1) zum Herstellen von mit einem flüssigen Produkt befüllten KunststoffFlüssigkeitsbehältnissen (10) mit einer Transporteinrichtung (2), welche die Kunststoffbehältnisse (10) entlang eines vorgegebenen Transportpfades (P) transportiert, mit einer Umformungseinrichtung (4), welche Kunststoffvorformlinge zu den Kunststoffbehältnissen (10) umformt, mit einer entlang des Transportpfads nach der Umformungseinrichtung (4) angeordneten ersten Fülleinrichtung (12), welche die Kunststoffbehältnisse (10) mit einem flüssigen Produkt befüllt und mit einer Kühleinrichtung (8), welche zwischen der Umformungseinrichtung (4) und der ersten Fülleinrichtung (12) angeordnet ist und welche wenigstens einen Bereich der Wandung der Kunststoffbehältnisse (10) durch Beaufschlagung mit einem fließfähigen Medium kühlt, wobei die Kühleinrichtung (8) eine zweite Fülleinrichtung (8) aufweist, welche eine Flüssigkeit in das Behältnis einfüllt, welche Flüssigkeit zum Kühlen eines Bodenbereichs (10a) des Kunststoffbehältnisses (10) dient,
**dadurch gekennzeichnet, dass**
die Vorrichtung (1) eine Dosiereinrichtung aufweist, welche einen Anteil des abzufüllenden Produkts als die Flüssigkeit zum Kühlen mittels der zweiten Fülleinrichtung (8) in die Kunststoffbehältnisse eindosiert, wobei auf eine Außenbenetzung der Behältnisse zu deren Kühlung verzichtet wird und/oder der Anteil kleiner ist als 30% der insgesamt in das Kunststoffbehältnis abzufüllenden Flüssigkeit.

2. Vorrichtung (1) nach Anspruch 1,
**dadurch gekennzeichnet, dass**
wenigstens eine Transporteinheit zum Transportieren der Kunststoffbehältnisse (10) zwischen der zweiten Fülleinrichtung (8) und der ersten Fülleinrichtung (12) vorgesehen ist.

3. Vorrichtung (1) nach wenigstens einem der vorangegangenen Ansprüche,
**dadurch gekennzeichnet, dass**
die Transporteinrichtung (2) mehrere aufeinanderfolgende Transporteinheiten (22, 24, 26) zum Transportieren der Kunststoffbehältnisse aufweist.

4. Vorrichtung (1) nach Anspruch 3,
**dadurch gekennzeichnet, dass**
wenigstens eine dieser Transporteinheiten (22, 24,26) einen drehbaren Träger aufweist, an dem eine Vielzahl von Haltelementen zum Halten der Behältnisse (10) angeordnet ist.

5. Vorrichtung (1) nach wenigstens einem der vorangegangenen Ansprüche,
**dadurch gekennzeichnet, dass**
die Vorrichtung (1) eine Kühleinrichtung zum Kühlen des durch die zweite Fülleinrichtung (8) einzufüllenden Produkts aufweist.

6. Vorrichtung (1) nach wenigstens einem der vorangegangenen Ansprüche,
**dadurch gekennzeichnet, dass**
die Vorrichtung (1) eine Steuerungseinrichtung aufweist, welche derart gesteuert ist, dass sie die Einfüllung des abzufüllenden flüssigen Produkts durch die erste Fülleinrichtung (12) in Abhängigkeit von der Einfüllung des abzufüllenden flüssigen Produkts durch die zweite Fülleinrichtung (8) steuert.

7. Verfahren zum Herstellen von mit einem flüssigen Produkt befüllten Kunststoffbehältnissen mittels einer Vorrichtung nach wenigstens einem der vorangegangenen Ansprüche, wobei zunächst Kunststoffvorformlinge mittels der Umformungseinrichtung (4) zu den Kunststoffbehältnissen (10) umgeformt werden und anschließend diese Kunststoffbehältnisse (10) mittels der Transporteinrichtung zur ersten Fülleinrichtung (12) transportiert werden und von dieser ersten Fülleinrichtung (12) mit einem abzufüllenden flüssigen Produkt befüllt werden und wobei wenigstens ein Bereich der Kunststoffbehältnisse zwischen der Umformungseinrichtung (4) und der ersten Fülleinrichtung (12) durch Beaufschlagung mit einem fließfähigen Medium mittels der Kühleinrichtung (8) gekühlt wird,
**dadurch gekennzeichnet, dass**
zum Zweck der Kühlung ein vorgegebener Anteil des abzufüllenden Produkts als Flüssigkeit zum Kühlen eines Bodenbereichs (10a) des Kunststoffbehältnisses (10) mittels der zweiten Fülleinrichtung (8) in die Kunststoffbehältnisse (10) eindosiert wird, wobei auf eine Außenbenetzung der Behältnisse zu deren Kühlung verzichtet wird und/oder der Anteil kleiner ist als 30% der insgesamt in das Kunststoffbehältnis abzufüllenden Flüssigkeit.

8. Verfahren nach Anspruch 7,
**dadurch gekennzeichnet, dass**
die erste Fülleinrichtung (12) und die zweite Fülleinrichtung (8) unterschiedliche Komponenten des Füllprodukts in das Behältnis einfüllen.

9. Verfahren nach Anspruch 7,
**dadurch gekennzeichnet, dass**
die zweite Fülleinrichtung eine nicht karbonisierte Flüssigkeit in die Kunststoffbehältnisse einfüllt.

## Claims

1. An apparatus (1) for the production of plastics material liquid containers (10) filled with a liquid product with a conveying device (2) which conveys the plastics material containers (10) along a pre-set conveying path (P), with a shaping device (4) which shapes plastics material pre-forms into the plastics material containers (10), with a first filling device (12) which is arranged downstream of the shaping device (4) along the conveying path and which fills the plastics material containers (10) with a liquid product, and with a cooling device (69) which is arranged between the shaping device (4) and the first filling device (12) and which cools at least one area of the wall of the plastics material containers (10) by acting upon it with a flowable medium, wherein the cooling device (69) has a second filling device (8) which fills a liquid into the container, which liquid is used for cooling a base area (10a) of the plastics material container (10),
**characterized in that**
the apparatus (1) has a metering device by which a portion of the product to be filled so the liquid for cooling is metered by means of the second filling device (8) into the plastics material containers, wherein an external wetting of the containers for the cooling thereof is dispensed with and/or the portion is less than 30 % of the liquid product to be filled in total into the plastics material container.

2. An apparatus (1) according to claim 1,
**characterized in that**
at least one conveying unit for conveying the plastics material containers (10) is provided between the second filling device (8) and the first filling device (12).

3. An apparatus (1) according to at least one of the preceding claims,
**characterized in that**
the conveying device (2) has a plurality of conveying units (22, 24, 26) following in succession for conveying the plastics material containers.

4. An apparatus (1) according to claim 3,
**characterized in that**
at least one of these conveying units (22, 24, 26) has a rotatable carrier on which a plurality of holding elements for holding the containers (10) are arranged.

5. An apparatus (1) according to at least one of the preceding claims,
**characterized in that**
the apparatus (1) has a cooling device for cooling the product to be filled by the second filling device (8).

6. An apparatus (1) according to at least one of the preceding claims,
**characterized in that**
the apparatus (1) has a control device which is controlled in such a way that it controls the filling of the liquid product to be filled by the first filling device (12) in a manner dependent upon the filling of the liquid product to be filled by the second filling device (8).

7. A method of producing plastics material containers filled with a liquid product by means of an apparatus according to at least one of the preceding claims, wherein plastics material pre-forms are first shaped by means of the shaping device (4) to form the plastics material containers (10) and these plastics material containers (10) are then conveyed by means of the conveying device to the first filling device (12) and are filled by this first filling device (12) with a liquid product for filling and wherein at least one area of the plastics material containers between the shaping device (4) and the first filling device (12) is cooled by being acted upon with a flowable medium by means of the cooling device (69),
**characterized in that**
for the purpose of cooling, a pre-set portion of the product for filling is metered into the plastic containers (10) by means of the second filling device (8) as a liquid for cooling a bottom region (10a) of the plastic container (10), wherein an external wetting of the containers for the cooling thereof is dispensed with and/or the portion is less than 30 % of the liquid product to be filled in total into the plastics material container.

8. A method according to claim 7,
**characterized in that**
the first filling device (12) and the second filling device (8) fill different components of the filling product into the container.

9. A method according to claim 7,
**characterized in that**
the second filling device fills a non-carbonated liquid into the plastics material containers.

## Revendications

1. Dispositif (1) de fabrication de récipients de liquide en matière plastique (10) remplis d'un produit liquide, comprenant un système de transport (2), lequel transporte les récipients en matière plastique (10) le long d'un trajet de transport (P) prédéfini, un système de transformation (4), lequel transforme les ébauches en matière plastique en récipients en matière plastique (10), un premier système de remplissage (12) qui est agencé le long du trajet de transport en aval du système de transformation (4) et qui remplit les récipients en matière plastique (10) d'un produit liquide et un système de refroidissement (8), lequel est agencé entre le système de transformation (4) et le premier système de remplissage (12) et lequel refroidit au moins une zone de la paroi des récipients en matière plastique (10) par application d'un milieu coulant, dans lequel le système de refroidissement (8) comprenant un deuxième système de remplissage (8), lequel verse un liquide dans le récipient, lequel liquide sert à refroidir une zone de fond (10a) du récipient en matière plastique (10),
**caractérisé en ce que**
le dispositif (1) comprend un système de dosage, lequel introduit de façon dosée dans les récipients en matière plastique une proportion du produit à verser utilisé comme liquide pour le refroidissement au moyen du deuxième système de remplissage (8), les récipients n'étant pas mouillés à l'extérieur pour les refroidir et/ou la proportion étant inférieure à 30 % du liquide total à verser dans le récipient en plastique.

2. Dispositif (1) selon la revendication 1,
**caractérisé en ce que**
au moins une unité de transport est prévue pour transporter les récipients en matière plastique (10) entre le deuxième système de remplissage (8) et le premier système de remplissage (12).

3. Dispositif (1) selon au moins l'une des revendications précédentes,
**caractérisé en ce que**
le système de transport (2) comprend plusieurs unités de transport (22, 24, 26) successives pour le transport des récipients en matière plastique.

4. Dispositif (1) selon la revendication 3,
**caractérisé en ce que**
au moins l'une de ces unités de transport (22, 24, 26) comprend un support rotatif sur lequel sont agencés une pluralité d'éléments de retenue servant à retenir les récipients (10).

5. Dispositif (1) selon au moins l'une des revendications précédentes,
**caractérisé en ce que**
le dispositif (1) comprend un système de refroidissement servant à refroidir le produit destiné à être versé par le deuxième système de remplissage (8).

6. Dispositif (1) selon au moins l'une des revendications précédentes,
**caractérisé en ce que**
le dispositif (1) comprend un système de commande, lequel est commandé de manière à commander le versement du produit liquide destiné à être versé par le premier système de remplissage (12) en fonction du versement du produit liquide destiné à être versé par le deuxième système de remplissage (8).

7. Procédé de fabrication de récipients en matière plastique remplis d'un produit liquide au moyen d'un dispositif selon au moins l'une des revendications précédentes, dans lequel des ébauches en matière plastique sont tout d'abord transformées en récipients en matière plastique (10) au moyen du système de transformation (4) et immédiatement après ces récipients en matière plastique (10) sont transportés en direction du premier système de remplissage (12) au moyen du système de transport et sont remplis d'un produit liquide à verser par le premier système de remplissage (12) et dans lequel au moins une zone des récipients en matière plastique est refroidie entre le système de transformation (4) et le premier système de remplissage (12) par application d'un milieu coulant au moyen du système de refroidissement (8),
**caractérisé en ce que**
en vue du refroidissement, une proportion prédéfinie du produit à verser utilisé comme liquide servant à refroidir une zone de fond (10a) du récipient en matière plastique (10) est introduite de façon dosée dans les récipients en matière plastique (10) au moyen du deuxième système de remplissage (8), les récipients n'étant pas mouillés à l'extérieur pour les refroidir et/ou la proportion étant inférieure à 30 % du liquide total à verser dans le récipient en plastique.

8. Procédé selon la revendication 7,
**caractérisé en ce que**
le premier système de remplissage (12) et le deuxième système de remplissage (8) versent différents composants du produit de remplissage dans le récipient.

9. Procédé selon la revendication 7,
**caractérisé en ce que**
le deuxième système de remplissage verse un liquide non carbonaté dans les récipients en matière plastique.
